## Europäisches Patentamt

## European Patent Office

## Office européen des brevets

(11) Veröffentlichungsnummer: **0 051 759**
A1

# EUROPÄISCHE PATENTANMELDUNG

(21) Anmeldenummer: 81108361.7

(22) Anmeldetag: 15.10.81

(51) Int. Cl.³: **F 16 D  65/10,** F 16 D  65/82, F 16 D  65/827

(30) Priorität: **08.11.80  DE 3042221**

(43) Veröffentlichungstag der Anmeldung: **19.05.82 Patentblatt 82/20**

(84) Benannte Vertragsstaaten: **AT BE CH FR GB IT LI LU NL SE**

(71) Anmelder: **Louven, Jakob, Kervendonk 4, D-4178 Kevelaer 2 (DE)**

(72) Erfinder: **Louven, Jakob, Kervendonk 4, D-4178 Kevelaer 2 (DE)**

(74) Vertreter: **Stark, Walter, Dr.-Ing., Moerser Strasse 140, D-4150 Krefeld (DE)**

(54) Bremstrommel, insbesondere für Kraftfahrzeuge.

(57)   Bei dieser Bremstrommel (1) ist ein dicht neben einem feststehenden, die Bremsbacken tragenden Bremsschild umlaufender Staubschutzring (5) vorgesehen.

Der Staubschutzring (5) hat die Aufgabe, zu verhindern, daß in den zwischen der umlaufenden Bremstrommel (1) und dem feststehenden Bremsschild gebildeten Spalt Staub in die Bremse eindringt. Das Eindringen von Staub kann jedoch nur unzulänglich verhindert werden, weil keine geeignete Abdichtung des Spaltes möglich ist.

Um Staubansatz in und an der Bremse zu verhindern, sind am Außenumfang des Staubschutzringes (5) oder außen neben dem Staubschutzring (5) eine Vielzahl von Lüftungsflügeln angeordnet, die sich zur Drehachse (8) schräg in Drehrichtung (9) erstrecken.

Das gilt insbesondere dann, wenn die Lüftungsflügel sich schräg zum Bremsschild bzw. zum Staubschutzring (5) hin erstrecken.

Die Lüftungsflügel können auch durch Schlitze (7) in einem Radialflansch (6) der Bremstrommel (1) gebildet sein. In Kombination dazu können auch zusätzliche Lüftungsflügel neben den Schlitzen (7) vorgesehen werden.

Um das Entlüften der Bremstrommel (1) zu fördern, kann es zweckmäßig sein, Zuluftlöcher in der Bremstrommel (1) oder im Bremsschild vorzusehen.

**Dr.-Ing. WALTER STARK**

PATENTANWALT

Moerser Straße 140    D-4150 Krefeld 1    ☎ (02151) 28222 u. 20469    ℡ 8 53 578

0051759

Jakob Louven, Uedemer Str. 4, 4178 Kevelaer-2/
Kervenheim

Bremstrommel, insbesondere für Kraftfahrzeuge

Die Erfindung betrifft eine Bremstrommel, insbesondere für Kraftfahrzeuge, mit einem dicht neben einem feststehenden, die Bremsbacken tragenden Bremsschild umlaufenden Staubschutzring.

Derartige Bremstrommeln sind in verschiedenen Ausführungsformen bekannt. Der Staubschutzring hat die Aufgabe, zu verhindern, daß in den zwischen der umlaufenden Bremstrommel und dem feststehenden Bremsschild gebildeten Spalt Staub in die Bremse eindringt. Das Eindringen von Staub kann jedoch nur unzulänglich verhindert werden, weil keine geeignete Abdichtung des Spaltes möglich ist. Hier will die Erfindung Abhilfe schaffen.

Aufgabe der Erfindung ist es, Staubansatz in und an der Bremse zu verhindern.

Diese Aufgabe wird dadurch gelöst, daß am Außenumfang des Staubschutzringes oder außen neben dem Staubschutzring eine Vielzahl von Lüftungsflügeln angeordnet sind, die sich zur Drehachse schräg in Drehrichtung erstrecken.

Deutsche Bank AG Krefeld 103/1525 BLZ 320 700 80    Sparkasse Krefeld 305722 BLZ 320 500 00    Postscheck Essen 4055-431 BLZ 360 100 43

0051759

- 2 -

Diese Lüftungsflügel sind an der Bremstrommel angeordnet und laufen mit der Bremstrommel um. Bei Drehung der Bremstrommel erzeugen die Lüftungsflügel eine Luftströmung, insbesondere einen Sog im Bereich des Spaltes zwischen umlaufender Bremstrommel und feststehendem Bremsschild, so daß sich weder Staub im Bereich des Spaltes absetzen noch in den Spalt eindringen kann. Auch die übrigen Oberflächenbereiche der Bremstrommel werden vom Staub freigehalten.

Das gilt insbesondere dann, wenn die Lüftungsflügel sich schräg zum Bremsschild hin erstrecken, d. h. während der Fahrt des Kraftfahrzeuges bei umlaufender Bremstrommel einen Luftstrom erzeugen, der aus der Richtung des Bremsschildes in Richtung der Bremstrommel bzw. darüberhinaus fließt.

Die Lüftungsflügel können auch durch Schlitze in einem Radialflansch der Bremstrommel gebildet sein. In Kombination dazu können auch zusätzliche Lüftungsflügel neben den Schlitzen vorgesehen werden.

Um das Entlüften der Bremstrommel zu fördern und insbesondere einen Luftstrom vom Inneren der Bremse durch den Spalt zwischen umlaufender Bremstrommel und feststehendem Bremsschild zu erzeugen, kann es zweckmäßig sein, in der Bremstrommel oder im Bremsschild Zuluftlöcher vorzusehen.

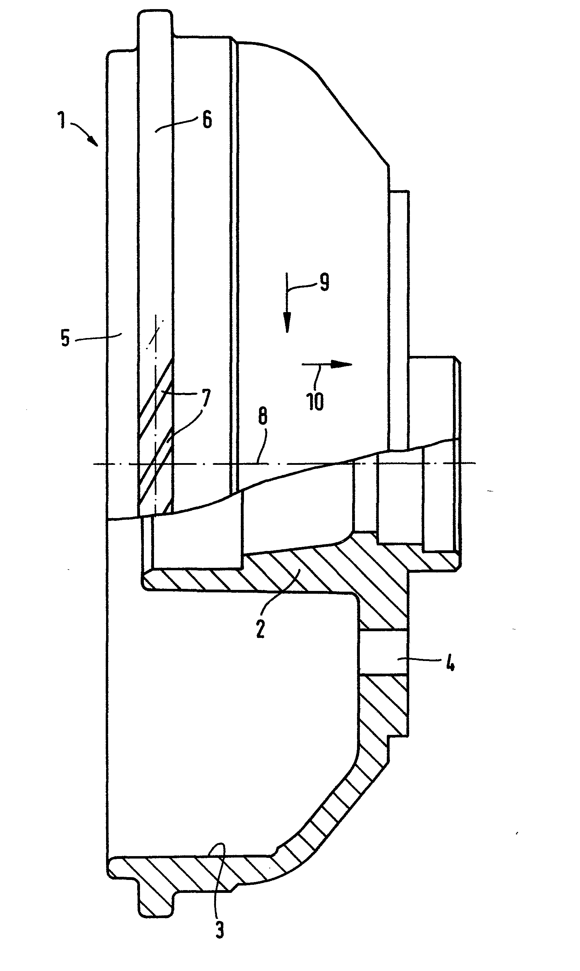

Im Folgenden wird ein in der Zeichnung dargestelltes Ausführungsbeispiel der Erfindung dargestellt. Die einzige Figur zeigt teilweise geschnitten eine Seiten-

0051759

- 3 -

ansicht einer Bremstrommel.

Die in der Zeichnung dargestellte Bremstrommel 1 besitzt einen üblichen Aufbau mit Nabe 2, Bremsfläche 3 und Bohrungen 4 für nicht dargestellte Stehbolzen zum Anschluß einer ebenfalls nicht dargestellten Felge. Die Bremstrommel 1 ist in üblicher Weise neben einem nicht dargestellten Bremsschild, der die feststehenden Bremsbacken dreht, angeordnet, wobei die Bremstrommel 1 auf der dem Bremsschild zugewandten Seite einen Staubschutzring 5 trägt, dessen Stirnseite entweder sehr dicht neben dem Bremsschild läuft oder der in einer zugeordneten Nut des Bremsschildes umläuft. In jedem Fall verbleibt zwischen Staubschutzring 5 und Bremsschild ein Spalt.

Bei der dargestellten Bremstrommel ist neben dem Staubschutzring 5 ein Radialflansch 6 vorgesehen, der eine Vielzahl von längs seines Umfangs verteilt angeordneten schräggestellten Schlitzen 7 aufweist. Beim dargestellten Ausführungsbeispiel sind die Schlitze 7 zur Drehachse 8 schräggestellt und zwar schräg zur Drehrichtung 9 der Bremstrommel 1 und schräg in Richtung auf den nicht dargestellten Bremsschild bzw. schräg in Richtung auf den Staubschutzring 5.

Bei fahrendem Kraftfahrzeug bzw. bei umlaufender Bremstrommel erzeugen die Schlitze 7 eine Luftströmung in Richtung des Pfeils 10. Dadurch wird die Ansammlung von Staub im Bereich der Bremse und ins-

0051759

– 4 –

besondere im Bereich des Spaltes zwischen Bremsschild und Bremstrommel 1 verhindert. Werden zusätzlich in nicht dargestellter Weise am Bremsschild oder
an der Bremstrommel Zuluftöffnungen vorgesehen, dann
steht im Spalt eine nach außen gerichtete Luftströmung, die ggf. in die Bremstrommel eingedrungenen
Staub wieder austrägt.

Nicht dargestellt ist, daß die Schlitze 7 des Radialflansches 6 auch durch schräggestellte Lüftungsflügel
ersetzt werden können oder daß neben dem Radialflansch 6 zusätzlich eine Reihe von längs des Umfangs
angeordneten Lüftungsflügeln vorgesehen sein können.

Wenn der Bremsschild vollständig in der Bremstrommel
untergebracht ist und der Spalt zwischen Bremstrommel
und Bremsschild sich in axialer Richtung erstreckt,
können die Lüftungsflügel auch am Außenumfang der
Bremstrommel so angebracht werden, daß sie sich in
radialer Richtung über den Spalt erstrecken.

0051759

<u>Ansprüche:</u>

1. Bremstrommel, insbesondere für Kraftfahrzeuge, mit einem dicht neben einem feststehenden, die Bremsbacken tragenden Bremsschild umlaufenden Staubschutzring, dadurch gekennzeichnet, daß am Außenumfang des Staubschutzringes (5) oder außen neben dem Staubschutzring (5)eine Vielzahl von Lüftungsflügeln angeordnet sind, die sich zur Drehachse (8) schräg in Drehrichtung (9) erstrecken.

2. Bremstrommel nach Anspruch 1, dadurch gekennzeichnet, daß die Lüftungsflügel sich schräg zum Bremsschild bzw. zum Staubschutzring (5) hin erstrecken.

3. Bremstrommel nach Anspruch 1 oder 2, dadurch gekennzeichnet, daß die Lüftungsflügel durch Schlitze (7) in einem Radialflansch (6) der Bremstrommel (1) gebildet sind.

4. Bremstrommel nach Anspruch 3, gekennzeichnet durch zusätzliche Lüftungsflügel neben den Schlitzen (7).

5. Bremstrommel nach einem der Ansprüche 1 bis 4, gekennzeichnet durch Zuluftlöcher in der Bremstrommel (1) oder im Bremsschild.

utsche Bank AG Krefeld 103/1525 BLZ 32070080  ·  Sparkasse Krefeld 305722 BLZ 32050000  ·  Postscheck Essen 4055-431 BLZ 36010043

0051759

- 6 -

6. Bremstrommel nach einem der Ansprüche 2 bis 5 in
   der Ausführung vollständig in der Bremstrommel
   untergebrachtem Bremsschild und sich in axialer
   Richtung erstreckenden Spalt, dadurch gekennzeichnet, daß die Lüftungsflügel sich vom Außenumfang
   der Bremstrommel in radialer Richtung erstrecken.

0051759

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | F 16 D 65/10 65/82 65/827 |
| X | US - A - 2 181 008 (BONZACK) <br><br> * insgesamt; Figuren 1-14 * | <br><br> 1,2,5,6 | |
| X | FR - A - 991 425 (FARKAS) <br><br> * Seite 2, linke Spalte, Zeilen 39-54; Figuren 5 und 6 * | <br><br> 1,2,5 | |
| A | US - A - 1 972 251 (UDALE) <br><br> * insgesamt; Figuren 1-3 * | <br><br> 3,4 | RECHERCHIERTE SACHGEBIETE (Int. Cl.³) |
| A | DE - B - 1 000 561 (FERODO) | 1,5 | F 16 D 65/00 |
| A | US - A - 2 059 170 (FARR) | 3,4 | |
| A | FR - A - 1 123 522 (DAIMLER-BENZ) | 1,6 | |
| A | US - A - 1 881 002 (UDALE) | 3,4 | |
| A | US - A - 1 912 789 (NORTON) | | |
| A | US - A - 3 583 533 (JONES) | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11.02.1982 | BRAEMS |